# EUROPÄISCHE PATENTSCHRIFT

(11) **EP 3 245 396 B1**
(45) Veröffentlichungstag und Bekanntmachung des Hinweises auf die Patenterteilung: **10.08.2022**
(21) Anmeldenummer: 16705705.8
(22) Anmeldetag: 12.01.2016
(51) Int. Cl.: F02M 35/12, F02B 33/44, F04D 29/66, F01N 1/02, F16L 55/033, F02C 7/24

(54) **FAHRZEUGSCHALLDÄMPFER**
MUFFLER FOR A VEHICLE
SILENCIUX POUR VEHICULE

(30) Priorität: 12.01.2015 AT 500182015
(43) Veröffentlichungstag der Anmeldung: 22.11.2017
(73) Patentinhaber: Henn GmbH & Co KG., 6850 Dornbirn (AT)
(72) Erfinder: GASSER, Hans, 6923 Lauterach (AT); HARTMANN, Harald, 6850 Dornbirn (AT)
(74) Vertreter: Burger, Hannes
(86) Internationale Anmeldenummer: PCT/AT2016/050003
(87) Internationale Veröffentlichungsnummer: WO 2016/112419

(56) Entgegenhaltungen:
- DE-A1-102005 005 865
- DE-A1-102008 032 491
- DE-A1-102011 108 059
- JP-A- 2000 045 782
- US-A1- 2007 284 178

## Beschreibung

Die Erfindung betrifft einen Fahrzeugschalldämpfer für eine Ladeluftleitung eines Verbrennungsmotors mit Turbolader.

Die DE10 2005 005 865 A1 offenbart einen Fahrzeugschalldämpfer mit einem Resonatorinnenelement, welches zusammen mit der Außenhülle des Fahrzeugschalldämpfers zwei Resonatorkammem bildet.

Aus der JP 2000 045782 A, der DE 10 2011 108 059 A1, der DE 10 2008 032 491 A1 und der DE 10 2005 005 865 A1 sind weitere Fahrzeugschalldämpfer bekannt.

Der vorliegenden Erfindung liegt die Aufgabe zugrunde, einen verbesserten Fahrzeugschalldämpfer zu schaffen, welcher trotz eines möglichst einfachen Aufbaus eine hohe Funktionalität bzw. Wirksamkeit aufweist.

Diese Aufgabe der Erfindung wird durch einen Fahrzeugschalldämpfer gemäß Anspruch 1 gelöst.

Erfindungsgemäß ist ein Fahrzeugschalldämpfer für eine Ladeluftleitung eines Verbrennungsmotors mit Turbolader ausgebildet. Der Fahrzeugschalldämpfer umfasst zumindest ein erstes Gehäuseteil mit einem ersten Außenmantel und ein zweites Gehäuseteil mit einem zweiten Außenmantel, welche Gehäuseteile in einem Verbindungsbereich miteinander gekoppelt sind und eine Außenhülle des Fahrzeugschalldämpfers bilden. Weiters umfasst der Fahrzeugschalldämpfer ein Resonatorinnenelement, welches formschlüssig in zumindest einem der Gehäuseteile aufgenommen ist und zumindest eine Kammertrennwand, sowie an einen inneren Umfang der Kammertrennwand anschließend zumindest einen ersten innenliegenden Rohrabschnitt aufweist. Durch die beiden Gehäuseteile und das Resonatorinnenelement ist zumindest eine erste und eine zweite Resonatorkammer ausgebildet. Das Resonatorinnenelement weist an einen äußeren Umfang der Kammertrennwand anschließend zumindest einen ersten außenliegenden Rohrabschnitt auf, welcher koaxial zum ersten innenliegenden Rohrabschnitt des Resonatorinnenelementes ausgebildet ist, wobei ein Ringraum zwischen dem auß enliegenden Rohrabschnitt und dem ersten Außenmantel und/oder dem zweiten Außenmantel ausgebildet ist.

Von Vorteil an der erfindungsgemäßen Ausbildung des Fahrzeugschalldämpfers ist, dass durch den Ringraum ein zusätzliches Frequenzspektrum gedämpft werden kann. Dies geschieht dadurch, dass Druckwellen in der ersten oder in der zweiten Resonatorkammer über den Ringraum übertragen werden können. Dadurch dass der Ringraum durch den ersten und den zweiten Außenliegenden Rohrabschnitt des Resonatorinnenelementes gebildet wird, kann der Fahrzeugschalldämpfer möglichst einfach aufgebaut sein, um eine hohe Wirksamkeit des Fahrzeugschalldämpfers zu erreichen.

Weiters kann es zweckmäßig sein, dass das erste und das zweite Gehäuseteil aus einem metallischen Werkstoff ausgeführt sind. Von Vorteil ist hierbei, dass die beiden Gehäuseteile dadurch robust sowie temperaturunempfindlich ausgeführt werden können. Darüber hinaus ist eine Serienfertigung von derartigen metallischen Gehäuseteilen einfach und kostengünstig möglich.

Ferner kann vorgesehen sein, dass das Resonatorinnenelement aus einem Kunststoffmaterial ausgebildet ist. Von Vorteil ist hierbei, dass das Resonatorinnenelement, welches als Kunststoffteil ausgebildet ist, eine geringe Dichte aufweist und somit die Gesamtmasse des Fahrzeugschalldämpfers möglichst gering gehalten werden kann. Darüber hinaus weist ein Resonatorinnenelement in Form eines Kunststoffteiles hervorragende Schwingungseigenschaften auf, um in einem Fahrzeugschalldämpfer eingesetzt zu werden. Ein weiterer Vorteil eines Kunststoffteiles liegt darin, dass dieses durch Spritzguss hergestellt werden kann und somit auch komplexe Formen gut hergestellt werden können.

Darüber hinaus kann vorgesehen sein, dass am Resonatorinnenelement gegenüberliegend dem ersten innenliegenden Rohrabschnitt ein zweiter innenliegender Rohrabschnitt an die Kammertrennwand anschließt. Von Vorteil ist hierbei, dass dadurch die erste bzw. die zweite Resonatorkammer entsprechend den Erfordernissen der Schalldämpfung ausgeführt werden kann.

Vorteilhaft ist auch eine Ausprägung, gemäß welcher am Resonatorinnenelement gegenüberliegend dem ersten außenliegenden Rohrabschnitt ein zweiter außenliegender Rohrabschnitt an die Kammertrennwand anschließt. Insbesondere kann dadurch die Länge des Ringraumes variiert werden, wodurch das im Ringraum gedämpfte Frequenzspektrum angepasst werden kann.

Gemäß einer Weiterbildung ist es möglich, dass das Resonatorinnenelement durch ein Positionierelement in Form eines ersten Steges und eines zweiten Steges in seiner Position fixierbar ist. Von Vorteil ist hierbei, dass das Resonatorinnenelement dadurch gut in den beiden Gehäuseteilen aufgenommen werden kann, wodurch eine möglichst exakte Positionierung des Resonatorinnenelementes gewährleistet werden kann.

Ferner kann es zweckmäßig sein, dass eine Spaltweite des Ringraumes relativ zur Länge des Ringraumes zwischen 0,5% und 20%, insbesondere zwischen 1,5% und 10%, bevorzugt zwischen 2,5% und 3,5% beträgt. Vor allem durch diese Abmessungen wird durch den Ringraum das Schalldämpfungsverhalten verbessert.

Darüber hinaus kann vorgesehen sein, dass die Länge des Ringraumes zwischen 5mm und 80mm, insbesondere zwischen 10mm und 50mm, bevorzugt zwischen 15mm und 25mm beträgt. Vor allem durch diese Abmessungen wird durch den Ringraum das Schalldämpfungsverhalten verbessert.

Weiters kann vorgesehen sein, dass die Spaltweite des Ringraumes relativ zu einer Wandstärke des außenliegenden Rohrabschnittes zwischen 20% und 200%, insbesondere zwischen 50% und 150%, bevorzugt zwischen 80% und 100% beträgt. Vor allem durch diese Abmessungen wird durch den Ringraum das Schalldämpfungsverhalten verbessert.

Insbesondere kann es vorteilhaft sein, dass das erste und das zweite Gehäuseteil als Blechumformteil ausgebildet sind. Besonders in der Serienfertigung sind Blechumformteile kostengünstig und mit einer hohen Wiederholgenauigkeit herzustellen, sodass die dadurch hergestellten Fahrzeugschalldämpfer eine hohe Maßgenauigkeit aufweisen.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Fahrzeugschalldämpfers;
- Fig. 2: eine Schnittdarstellung eines Fahrzeugschalldämpfers mit Schnittführung entlang seiner Mittellinie;
- Fig. 3: eine Explosionsdarstellung eines Fahrzeugschalldämpfers in Schnittdarstellung mit Stegen;
- Fig. 4: eine Detailansicht des Ringraumes aus der Schnittdarstellung nach Fig. 2;
- Fig. 5: eine schematische Darstellung eines Kraftfahrzeuges mit einem an den Turbolader angeschlossenen Fahrzeugschalldämpfer.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

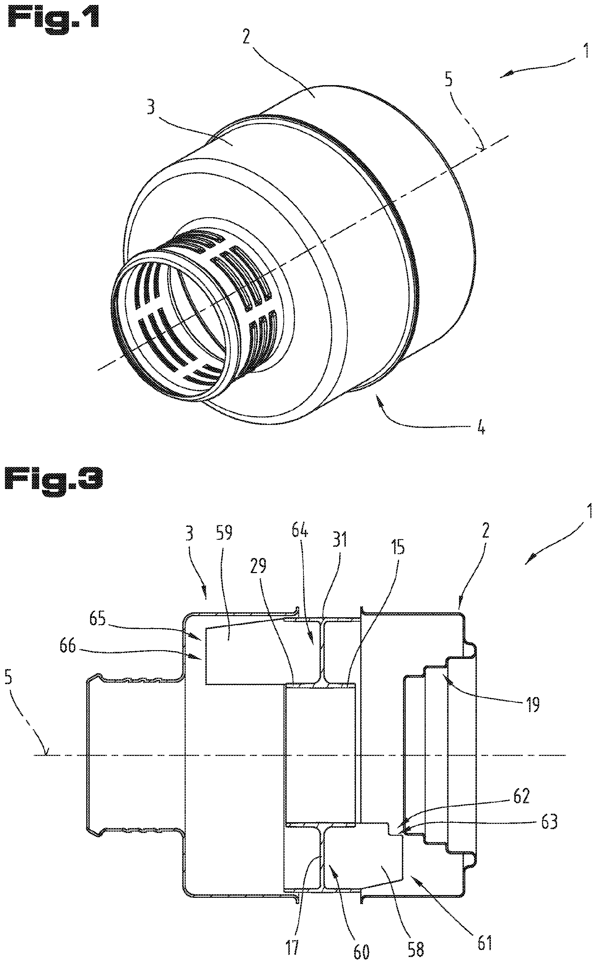

Fig. 1 zeigt eine isometrische Ansicht des Fahrzeugschalldämpfers 1. Der in dieser Ansicht dargestellte Fahrzeugschalldämpfer 1 weist einen ersten Gehäuseteil 2 und einen zweiten Gehäuseteil 3 auf, welche in einem Füge- bzw. Verbindungsbereich 4 miteinander verbunden sind. Der Fahrzeugschalldämpfer 1 ist in diesem Ausführungsbeispiel als rotationssymmetrischer Hohlkörper ausgebildet und weist daher eine Mittelachse 5 auf. Die in weiterer Folge noch genauer beschriebene, erfindungsgemäße Ausführung ist jedoch nicht auf einen rotationssymmetrischen Hohlkörper beschränkt, sondern ist es auch denkbar, dass der Fahrzeugschalldämpfer 1 etwa einen rechteckigen oder einen polygonen Querschnitt aufweist. Insbesondere ist es möglich, dass der Hohlkörper eine prismatische Grundform besitzt, also an dessen Mantelfläche partiell vorhandene Flachstellen aufweist.

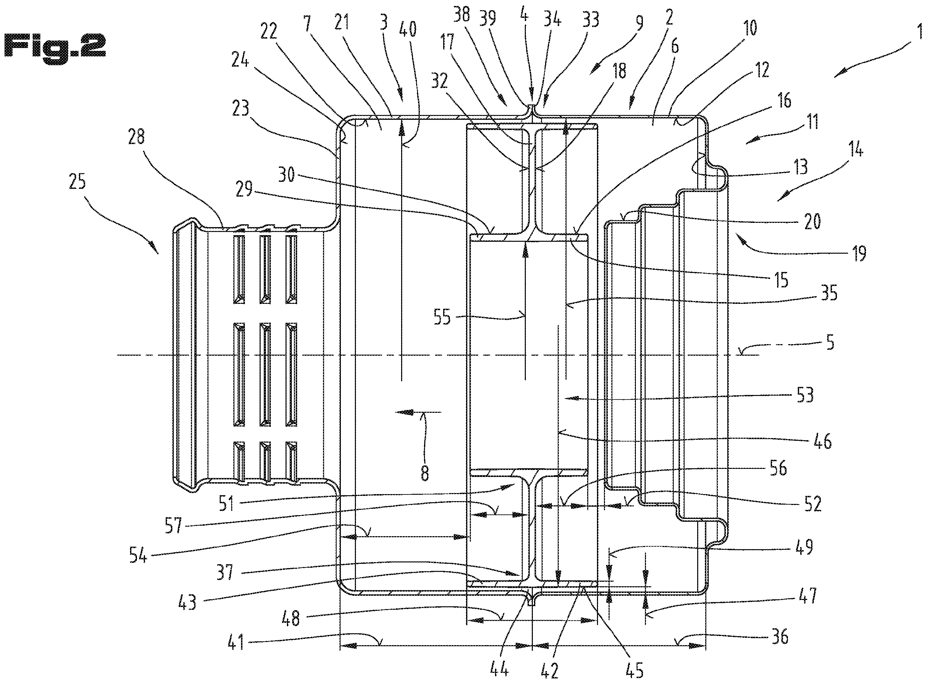

Fig. 2 zeigt einen Schnitt durch ein erstes Ausführungsbeispiel eines Fahrzeugschalldämpfers 1 entlang seiner Mittelachse 5. Der hier dargestellte Fahrzeugschalldämpfer 1 umfasst eine erste Resonatorkammer 6 und eine zweite Resonatorkammer 7. In Bezug auf die Durchströmrichtung 8 für das gasförmige Medium, insbesondere für die Lade- bzw. Verbrennungsluft, ist die erste Resonatorkammer 6 vor der zweiten Resonatorkammer 7 angeordnet. Die beiden Gehäuseteile 2, 3 bilden den oben genannten Hohlkörper, insbesondere eine Außenhülle 9 des Fahrzeugschalldämpfers 1. Die erste Resonatorkammer 6 wird außenseitig durch einen ersten Außenmantel 10 und eine erste Stirnwand 11 begrenzt. Die erste Stirnwand 11 kann entweder als flache Wand ausgeführt sein, oder wie in Fig. 2 dargestellt als Wand mit Abstufungen.

Der erste Außenmantel 10 sowie die erste Stirnwand 11 sind hierbei im ersten Gehäuseteil 2 umfasst. Präzise gesagt wird die erste Resonatorkammer 6 in deren Außenbereich durch eine Innenmantelfläche 12 des ersten Außenmantels 10 und durch eine Stirninnenfläche 13 der ersten Stirnwand 11 begrenzt.

Die erste Stirnwand 11 weist eine Einströmöffnung 14 auf, durch welche das Medium, insbesondere die komprimierte Ansaugluft, in die erste Resonatorkammer 6 einströmen kann. Die erste Resonatorkammer 6 wird innenseitig partiell durch einen ersten innenliegenden Rohrabschnitt 15 eines Resonatorinnenelementes 31, respektive durch eine Außenmantelfläche 16 des ersten innenliegenden Rohrabschnittes 15 und durch eine Kammertrennwand 17 des Resonatorinnenelementes 31 respektive eine erste Wandfläche 18 der Kammertrennwand 17 begrenzt.

Weiters kann vorgesehen sein, dass die Einströmöffnung 14 einen im Axialschnitt stufenförmig verjüngend ausgebildeten Ansatz 19 zur Aufnahme eines Kupplungselementes aufweist. Hierbei kann der stufenförmig verjüngend ausgebildete Ansatz 19 so in die erste Resonatorkammer 6 einstehend bzw. hineinragend ausgebildet sein, dass dieser die erste Resonatorkammer 6 begrenzt. Insbesondere kann vorgesehen sein, dass eine außenliegende Mantelfläche 20 des stufenförmig verjüngend ausgebildeten Ansatzes 19 die erste Resonatorkammer 6 begrenzt.

Analog dazu kann vorgesehen sein, dass die zweite Resonatorkammer 7 in dessen Außenbereich durch das zweite Gehäuseteil 3 begrenzt wird. Das zweite Gehäuseteil 3 kann hierbei einen zweiten Außenmantel 21 mit einer zweiten Innenmantelfläche 22 aufweisen. Weiters kann vorgesehen sein, dass das zweite Gehäuseteil 3 eine zweite Stirnwand 23 umfasst, wobei die zweite Resonatorkammer 7 durch eine zweite Stirninnenfläche 24 der zweiten Stirnwand 23 begrenzt wird. Das zweite Gehäuseteil 3 weist außerdem an dessen zweiter Stirnwand 23 eine Ausströmöffnung 25 auf, durch welche das gasförmige Medium geführt werden kann. In diesem in Fig. 2 dargestellten Ausführungsbeispiel verläuft die zweite Stirnwand 23 radial vom zweiten Außenmantel 21 in Richtung Zentrum. Die zweite Stirnwand 23 ist daher in einem rechten Winkel zum zweiten Außenmantel 21 angeordnet. In weiteren Ausführungsbeispielen kann die zweite Stirnwand 23 jedoch andersartig ausgebildet sein.

Der erste Gehäuseteil 2 ist somit einströmseitig 26 und der zweite Gehäuseteil 3 ausströmseitig 27 des Resonators respektive des Fahrzeugschalldämpfers 1 angeordnet. Weiters kann vorgesehen sein, dass an die Ausströmöffnung 25 ein Anschlussstutzen 28 gekoppelt ist, welcher dazu vorgesehen ist, einen Druckschlauch anzuschließen. Der Anschlussstutzen 28 kann, wie in Fig. 2 ersichtlich einteilig mit dem zweiten Gehäuseteil 3 ausgebildet sein. In einer Alternativvariante kann auch vorgesehen sein, dass der Anschlussstutzen 28 als eigenständiges Bauteil ausgeführt sein, welches beispielsweise durch eine Schweißverbindung mit dem zweiten Gehäuseteil 3 verbunden ist. Weiters kann vorgesehen sein, dass der Anschlussstutzen 28 nicht direkt an das zweiten Gehäuseteil 3 anschließt, sondern dass noch weitere Gehäuseteile am Fahrzeugschalldämpfer 1 ausgebildet sind.

An der Innenseite wird die zweite Resonatorkammer 7 durch einen zweiten, innenliegenden Rohrabschnitt 29 des Resonatorinnenelementes 31, insbesondere durch eine Außenmantelfläche 30 des zweiten innenliegenden Rohrabschnittes 29 begrenzt. Weiters wird die zweite Resonatorkammer 7 durch die Kammertrennwand 17, insbesondere durch eine zweite Wandfläche 32 der Kammertrennwand 17 zur ersten Resonatorkammer 6 abgegrenzt.

In der Ausführungsvariante des Fahrzeugschalldämpfers 1 gemäß Fig. 2 umfasst der Fahrzeugschalldämpfer 1, welcher zwei Resonatorkammern 6, 7 aufweist, einen ersten Gehäuseteil 2, einen zweiten Gehäuseteil 3 und das Resonatorinnenelement 31.

Der erste Gehäuseteil 2 und der zweite Gehäuseteil 3 sind in einer vorteilhaften Ausführungsvariante als Tiefziehteile ausgebildet. Insbesondere kann vorgesehen sein, dass die beiden Gehäuseteile 2, 3 aus einem metallischen Werkstoff, etwa aus einem Stahlblech geformt bzw. tiefgezogen werden. Vorzugsweise wird hierbei ein Edelstahlblech verwendet.

Das Resonatorinnenelement 31 kann aus einem Kunststoffmaterial gebildet und insbesondere als Spritzgussteil ausgeführt sein.

Die einzelnen Bauteile des Fahrzeugschalldämpfers 1 sind so ausgebildet, dass das Resonatorinnenelement 31 im ersten Gehäuseteil 2 und/oder im zweiten Gehäuseteil 3 formschlüssig aufgenommen ist. Der Fahrzeugschalldämpfer 1 kann dabei im Verbindungsbereich 4 eine stoffschlüssige Verbindung aufweisen, indem der erste Gehäuseteil 2 und der zweite Gehäuseteil 3 in diesem Füge- bzw. Verbindungsbereich 4 durch eine Laser- oder Plasmaschweißverbindung miteinander verbunden sind.

Im folgenden Beschreibungsteil werden die Einzelteile, welche der Fahrzeugschalldämpfer 1 umfasst, hinsichtlich ihrer Ausgestaltung beschrieben. Es sei jedoch darauf hingewiesen, dass sich die Ausgestaltung dieser Einzelteile auf eine Ausführungsvariante des Fahrzeugschalldämpfers 1 bezieht. Es ist nicht zwingend erforderlich, dass für die erfindungsgemäße Ausbildung sämtliche hier beschriebenen Ausbildungsmerkmale der Einzelteile realisiert werden bzw. diese wie hier beschrieben ausgestaltet werden.

Der erste Gehäuseteil 2 umfasst in dessen Verbindungsbereich 4 zum zweiten Gehäuseteil 3 einen ersten Verbindungsabschnitt 33. Der erste Verbindungsabschnitt 33 weist an dessen freien Ende einen radial nach außen abstehenden Flansch 34 auf, mittels welchem der erste Gehäuseteil 2 mit dem zweiten Gehäuseteil 3 verbunden ist.

Die Verbindung zwischen erstem Gehäuseteil 2 und zweiten Gehäuseteil 3 wird vorzugsweise durch eine stoffschlüssige Verbindung, etwa einer Schweißverbindung, insbesondere einer Laser-, Plasma- oder Mikroplasma-Schweißverbindung, realisiert.

Einströmseitig 26 schließt an den ersten Verbindungsabschnitt 33 der erste Außenmantel 10 an. Der erste Außenmantel 10 weist an dessen Innenmantelfläche 12 eine Querschnittsabmessung 35 auf. Der erste Außenmantel 10 weist eine Axialerstreckung 36 auf.

Anschließend an den ersten Außenmantel 10 ist die erste Stirnwand 11 ausgebildet, welche die Einströmöffnung 14 und den im Axialschnitt stufenförmig verjüngend ausgebildeten Ansatz 19 zur Aufnahme eines Kupplungselementes aufweist. Die erste Stirnwand 11 schließt hierbei in Richtung Zentrum verlaufend an den ersten Außenmantel 10 an.

Der zweite Gehäuseteil 3 weist einen zweiten Verbindungsabschnitt 38 auf, an welchen der zweite Außenmantel 21 anschließt. Insbesondere der Bereich um den Verbindungsabschnitt 38 des zweiten Gehäuseteils 3 ist analog zum ersten Verbindungsabschnitt 33 des ersten Gehäuseteils 2 ausgebildet. Um Wiederholungen zu vermeiden, wird auf eine detaillierte Beschreibung der einzelnen Flächen und Lagen zueinander verzichtet.

Auch an den zweiten Verbindungsabschnitt 38 schließt ein Flansch 39 an, welcher im verbauten Zustand vorzugsweise durch eine Schweißverbindung mit dem Flansch 34 des ersten Verbindungsabschnitts 33 verbunden ist. Der zweite Außenmantel 21 weißt an dessen Innenmantelfläche 22 eine Querschnittsabmessung 40 auf. Die Querschnittsabmessung 40 des zweiten Außenmantels 21 und die Querschnittsabmessung 35 des ersten Außenmantels 10 sind vorzugsweise gleich groß. Der zweite Außenmantel 21 weist außerdem eine Axialerstreckung 41 auf.

Das Resonatorinnenelement 31 weist am äußeren Umfang 37 seiner Kammertrennwand 17 einen ersten außenliegenden Rohrabschnitt 42 und einen zweiten außenliegenden Rohrabschnitt 43 auf, welche einander gegenüberliegend an die Kammertrennwand 17 anschließen. Wie aus Fig. 2 gut ersichtlich, sind der erste außenliegende Rohrabschnitt 42 und der zweite außenliegende Rohrabschnitt 43 des Resonatorinnenelementes 31 derart ausgebildet und dimensioniert, dass zwischen diesen und dem ersten Außenmantel 10 und/oder dem zweiten Außenmantel 21 ein Ringraum 44 ausgebildet ist. Insbesondere erstreckt sich der Ringraum 44 zwischen der Innenmantelfläche 12 des ersten Außenmantels 10 und einer Außenmantelfläche 45 der außenliegenden Rohrabschnitte 42, 43.

Der Ringraum 44 ist insbesondere dadurch gebildet, dass ein Außendurchmesser 46 des ersten außenliegenden Rohrabschnittes 42 und/oder des zweiten außenliegenden Rohrabschnittes 43 kleiner als die Querschnittsabmessung 35 der Innenmantelfläche 12 des ersten Außenmantels 10 und die Querschnittsabmessung 40 der Innenmantelfläche 22 des zweiten Außenmantels 21 gewählt ist. Durch diese Differenz der Querschnittsabmessungen ergibt sich eine Spaltweite 47, welche die Größe des Ringraumes 44 definiert.

Durch die Längserstreckung des ersten außenliegenden Rohrabschnittes 42 und des zweiten außenliegenden Rohrabschnittes 43 ergibt sich eine Länge 48 des Ringraumes 44.

Der Ringraum 44 erfüllt den Zweck, dass die beiden Resonatorkammern 6, 7 strömungsverbunden sind. Somit kann bei Druckanstieg in der ersten Resonatorkammer 6 die davon ausgehende Druckwelle im Ringraum 44 gedämpft werden. Insbesondere kann durch den Ringraum 44 im Fahrzeugschalldämpfer 1 eine zusätzliche Frequenz gedämpft werden, wodurch die Dämfpeigenschaften des Fahrzeugschalldämpfers 1 verbessert werden können.

Das Dämpfungsverhalten des Fahrzeugschalldämpfers 1 wird hierbei von der Spaltweite 47 und der Länge 48 des Ringraumes 44 bzw. von deren Größenverhältnis zueinander stark beeinflusst. Darüber hinaus kann das Dämpfungsverhalten des Fahrzeugschalldämpfers 1 durch die Wandstärke 49 der außenliegenden Rohrabschnitte 42, 43 beeinflusst werden.

Anschließend an die außenliegenden Rohrabschnitte 42, 43 des Resonatorinnenelementes 31 ist die Kammertrennwand 17 ausgebildet. Die Kammertrennwand 17 erstreckt sich hierbei in Richtung Zentrum des Fahrzeugschalldämpfers 1. Am inneren Umfang 51 der sich in radialer Richtung erstreckenden Kammertrennwand 17 ist an einer ersten Seite der erste innenliegende Rohrabschnitt 15 ausbildet. Der erste innenliegende Rohrabschnitt 15 ist hierbei ausgehend von der Kammertrennwand 17 in Richtung Einströmöffnung 14 gezogen. An der gegenüberliegenden Seite der Kammertrennwand 17 ist der zweite innenliegende Rohrabschnitt 29 ausgebildet, welcher ausgehend von der Kammertrennwand 17 in Richtung Ausströmöffnung 25 verläuft bzw. gezogen ist.

Durch den ersten innenliegenden Rohrabschnitt 15 und das erste Gehäuseteil 2 wird ein erster Kammerspalt 52 gebildet, durch welchen die erste Resonatorkammer 6 mit einer freien Durchströmöffnung 53 derart verbunden ist, dass ein Gasaustausch zwischen diesen möglich ist. Analog dazu wird durch den zweiten innenliegenden Rohrabschnitt 29 und das zweite Gehäuseteil 3 ein zweiter Kammerspalt 54 gebildet, durch welchen die zweite Resonatorkammer 7 mit der freien Durchströmöffnung 53 verbunden ist.

Der erste innenliegende Rohrabschnitt 15 und der zweite innenliegende Rohrabschnitt 29 weisen vorzugsweise einen gleich großen gemeinsamen Innendurchmesser 55 auf. Eine Axialerstreckung 56 des ersten innenliegenden Rohrabschnittes 15 und eine Axialerstreckung 57 des zweiten innenliegenden Rohrabschnittes 29 hängen von der Axialerstreckung 36 des ersten Außenmantels 10 bzw. von der Axialerstreckung 41 des zweiten Außenmantels 21 ab. Durch Variation der Axialerstreckung 56 des ersten innenliegenden Rohrabschnittes 15 bzw. der Axialerstreckung 57 des zweiten innenliegenden Rohrabschnittes 29 können die Kammerspalte 52, 54 festgelegt werden bzw. kann dadurch das Resonatorverhalten beeinflusst werden.

In der Fig. 3 ist eine weitere und gegebenenfalls für sich eigenständige Ausführungsform des Fahrzeugschalldämpfers 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Fig. 3 zeigt eine Explosionsdarstellung des Fahrzeugschalldämpfers 1. Hieraus ist gut ersichtlich, wie der Fahrzeugschalldämpfer 1 gefertigt bzw. zusammengebaut werden kann.

Insbesondere ist in dem Ausführungsbeispiel des Fahrzeugschalldämpfers 1 nach Fig. 3 ersichtlich, dass das Resonatorinnenelement 31 ein Positionierelement 50 aufweisen kann, welches zur Positionierung des Resonatorinnenelementes 31 innerhalb der beiden Gehäuseteile 2, 3 dient.

Das Positionierelement 50 kann zumindest einen ersten Steg 58 aufweisen, welcher außenseitig des ersten innenliegenden Rohrabschnittes 15 angeordnet ist und an diesen anschließt. Vorzugsweise sind drei dieser ersten Stege 58 gleichmäßig über den Umfang des ersten innenliegenden Rohrabschnittes 15 verteilt angeordnet, das heißt um 120° zueinander versetzt. Somit kann eine symmetrische Stabilisierung des ersten innenliegenden Rohrabschnittes 15 erreicht werden.

Weiters kann das Resonatorinnenelement 31 zumindest einen zweiten Steg 59 aufweisen, welcher außenseitig des zweiten innenliegenden Rohrabschnittes 29 angeordnet ist und an diesen anschließt. Vorzugsweise sind drei dieser zweiten Stege 59 gleichmäßig über den Umfang des zweiten innenliegenden Rohrabschnittes 29 verteilt angeordnet, das heißt um 120° zueinander versetzt. Somit kann eine symmetrische Stabilisierung des zweiten innenliegenden Rohrabschnittes 29 erreicht werden. Weiters kann vorgesehen sein, dass einer der ersten Stege 58 jeweils zu einem der zweiten Stege 59 um 60° versetzt angeordnet ist.

Wie besonders gut aus Fig. 3 ersichtlich, kann vorgesehen sein, dass eine erste Stegstirnseite 60 des ersten Steges 58 an die Kammertrennwand 17 anschließt und eine zweite Stegstirnseite 61 des ersten Steges 58 einen Abstützabschnitt 62 aufweist, welcher mit dem ersten Gehäuseteil 2 zusammenwirkt. Insbesondere kann vorgesehen sein, dass im Abstützabschnitt 62 eine Abstufung 63 ausgebildet ist, welche in den sich stufenförmig verjüngend ausgebildeten Ansatz 19 eingreift. Durch das Zusammenwirken der Abstufung 63 mit dem sich stufenförmig verjüngend ausgebildeten Ansatz 19 kann erreicht werden, dass das Resonatorinnenelement 31 in seiner axialen Lage bezüglich der beiden Gehäuseteile 2, 3 positioniert werden kann. Darüber hinaus kann vorgesehen sein, dass das Resonatorinnenelement 31 bezüglich einer winkeligen Lage seiner Mittelachse 5 zur winkeligen Lage der Mittelachse 5 des ersten 2 und zweiten Gehäuseteils 3 positioniert bzw. fixiert wird. Vorzugsweise sind die Mittelachse 5 des Resonatorinnenelementes 31 und die Mittelachse 5 der Außenhülle 9 koaxial zueinander positioniert.

Analog dazu kann vorgesehen sein, dass eine erste Stegstirnseite 64 des zweiten Steges 59 an die Kammertrennwand 17 anschließt und eine zweite Stegstirnseite 65 des zweiten Steges 59 ebenfalls einen Abstützabschnitt 66 aufweist. Dieser Abstützabschnitt 66 kann mit dem zweiten Gehäuseteil 3 zusammenwirken. Weiters ist es denkbar, dass der erste Steg 58 über den ersten innenliegenden Rohrabschnitt 15 hinausragt und/oder dass der zweite Steg 59 über den zweiten innenliegenden Rohrabschnitt 29 hinausragt. Insbesondere kann vorgesehen sein, dass der erste Steg 58 zwischen erstem innenliegenden Rohrabschnitt 15 und erstem außenliegenden Rohrabschnitt 42 angeordnet und mit der Kammertrennwand 17 verbunden ist. Weiters kann vorgesehen sein, dass der zweite Steg 59 zwischen zweitem innenliegenden Rohrabschnitt 29 und zweitem außenliegenden Rohrabschnitt 43 angeordnet und mit der Kammertrennwand 17 verbunden ist.

Im Folgenden wird ein möglicher Produktionsprozess zur Herstellung eines Ausführungsbeispiels des in der Figur 3 gezeigten Fahrzeugschalldämpfers 1 kurz umrissen.

Am Beginn des Produktionsprozesses kann vorgesehen sein, dass der erste Gehäuseteil 2 und der zweite Gehäuseteil 3 tiefgezogen werden, sodass sie ihre charakteristische topf- bzw. napfförmige Form erhalten. Das Resonatorinnenelement 31 kann durch einen Spritzgussvorgang aus einem Kunststoffgranulat gefertigt werden. Beim Zusammenbau des Fahrzeugschalldämpfers 1 kann entweder das erste Gehäuseteil 2 oder das zweite Gehäuseteil 3 als Basis verwendet werden, wobei die anderen Teile darauf aufgesetzt und aufgebaut werden. In diesem Ausführungsbeispiel wird der beispielhafte Zusammenbau unter der Annahme beschrieben, dass das zweite Gehäuseteil 3 das Basiselement darstellt.

Das zweite Gehäuseteil 3 wird in eine Montagevorrichtung eingesetzt, um dort gehaltert zu werden. Weiters ist es auch denkbar, dass das zweite Gehäuseteil 3 von einem Manipulator, beispielsweise einem Roboter, gehalten wird.

In einem weiteren Verfahrensschritt wird das Resonatorinnenelement 31 in den zweiten Verbindungsabschnitt 38 des zweiten Gehäuseteil 3 eingesetzt. Die axiale Lage des Resonatorinnenelementes 31 relativ zum zweiten Gehäuseteil 3 kann hierbei durch den zweiten Steg 59 bestimmt werden.

Wie bereits erwähnt, ist es nicht von Bedeutung, wie das Resonatorinnenelement 31 beim Einsetzen in den zweite Gehäuseteil 3 orientiert ist.

In einem weiteren Verfahrensschritt wird das erste Gehäuseteil 2 relativ zum zweiten Gehäuseteil 3 positioniert.

Die beiden Gehäuseteile 2, 3 werden soweit aneinander geschoben bzw. aneinander gedrückt, bis der Flansch 34 des ersten Verbindungsabschnitt 33 den Flansch 39 des zweiten Verbindungsabschnittes 38 kontaktiert.

In einem weiteren Verfahrensschritt kann nun das erste Gehäuseteil 2 mit dem zweiten Gehäuseteil 3 verbunden werden. Insbesondere werden hier die aneinander liegenden Flansche 34, 39 verschweißt. Als Schweißverfahren für einen industriellen Fertigungsprozess, insbesondere einer Massenfertigung, wird hierbei vorteilhafterweise ein Laser- oder ein Plasmaschweißverfahren verwendet. Es ist jedoch auch denkbar, dass ein beliebiges, anderes Schweißverfahren verwendet wird, welches geeignet ist, die beiden Gehäuseteile 2, 3 stoffschlüssig miteinander zu verbinden. Die beiden Flansche 34, 39 können dazu dienen, dass ein Durchbrennen des dünnen Bleches, aus welchem die Gehäuseteile 2, 3 gefertigt sind, vermieden wird und somit die Schweißverbindung der beiden Gehäuseteile 2, 3 eine hohe Festigkeit aufweisen kann.

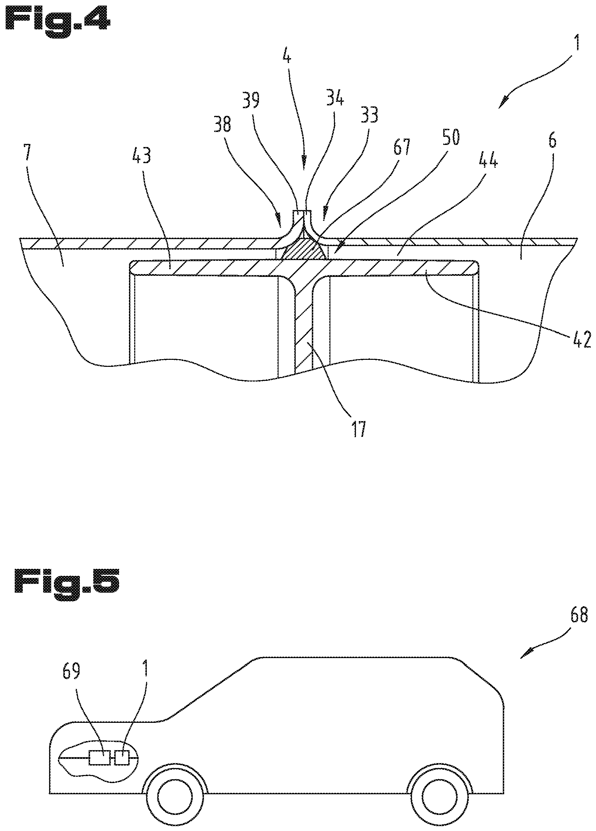

In der Fig. 4 ist eine weitere und gegebenenfalls für sich eigenständige Ausführungsform des Fahrzeugschalldämpfers 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Fig. 4 zeigt das weitere Ausführungsbeispiel des Fahrzeugschalldämpfers 1 in einer Detailansicht einer Schnittdarstellung entsprechend Fig. 2. Im Gegensatz zu dem in der vorherigen Figur 3 dargestellten Ausführungsbeispiel des Fahrzeugschalldämpfers 1, ist in diesem Ausführungsbeispiel das Positionierelement 50 in Form eines Positionierzapfens 67 ausgeführt. Wesentlich ist hierbei, dass der Positionierzapfen 67 als über dem Umfang gesehen segmentales Element ausgeführt ist, um eine Strömungsverbindung zwischen erster 6 und zweiter Resonatorkammer 7 zu gewährleisten. Hierbei kann vorgesehen sein, dass mehrere dieser Positionierzapfen 67 am Umfang verteilt angeordnet sind, um einen sicheren Halt des Resonatorinnenelementes 31 innerhalb der Gehäuseteile 2, 3 erreichen zu können. Insbesondere kann vorgesehen sein, dass drei dieser Positionierzapfen 67 gleichmäßig über den Umfang des zweiten innenliegenden Rohrabschnittes 29 verteilt angeordnet, das heißt um 120° zueinander versetzt sind. Somit kann eine symmetrische Stabilisierung des Resonatorinnenelementes 31 erreicht werden.

Wie aus Fig. 4 ersichtlich, kann vorgesehen sein, dass der Positionierzapfen 67 derart ausgebildet ist, dass er im zusammengefügten Zustand der beiden Gehäuseteile 2, 3 zwischen erstem Verbindungsabschnitt 33 und zweitem Verbindungsabschnitt 38 aufgenommen werden kann. Das Resonatorinnenelement 31 kann somit durch Fügen der beiden Gehäuseteile 2, 3 zueinander positioniert werden.

Der Positionierzapfen 67 kann beispielsweise einteilig mit dem Resonatorinnenelement 31 ausgeführt sein. Es ist jedoch auch möglich, dass der Positionierzapfen 67 als Anguss ausgeführt ist, welcher auf das Resonatorinnenelement 31 aufgebracht wird.

Fig. 5 zeigt ein Fahrzeug 68 mit einem Turbolader 69 und einem auf der Druckseite des Turboladers 69 angeschlossenen, erfindungsgemäßen Fahrzeugschalldämpfer 1.

Als Turbolader 67 ist dabei eine Verdichtungsvorrichtung für Verbrennungsluft der Verbrennungskraftmaschine des Fahrzeuges 66 zu verstehen. Anstelle eines Turboladers 67 kann auch eine Kompressoranordnung oder eine sonstige den Ladedruck der Verbrennungsluft erhöhende Vorrichtung eingesetzt werden. Der erfindungsgemäße Fahrzeugschalldämpfer 1 reduziert bzw. minimiert dabei während des Betriebs der Verbrennungskraftmaschine auftretende Strömungs- bzw. Pfeif- oder Vibrationsgeräusche zumindest innerhalb eines gewissen Frequenzbereiches. Mit dem angegebenen Fahrzeugschalldämpfer 1 kann somit das erzielbare Komfortniveau von Kraftfahrzeugen, deren Verbrennungskraftmaschine ladedruckseitig mit dem angegebenen Fahrzeugschalldämpfer 1 versehen ist, gesteigert werden.

**Bezugszeichenaufstellung**

| | | | |
|---|---|---|---|
| 1 | Fahrzeugschalldämpfer | 29 | zweiter innenliegender Rohrab-schnitt |
| 2 | erster Gehäuseteil | | |
| 3 | zweiter Gehäuseteil | 30 | Außenmantelfläche |
| 4 | Verbindungsbereich | 31 | Resonatorinnenelement |
| 5 | Mittelachse | 32 | zweite Wandfläche |
| 6 | erste Resonatorkammer | 33 | erster Verbindungsabschnitt |
| 7 | zweite Resonatorkammer | 34 | Flansch erster Verbindungsab-schnitt |
| 8 | Durchströmrichtung | | |
| 9 | Außenhülle | 35 | Querschnittsabmessung erster Au-ßenmantel |
| 10 | erster Außenmantel | | |
| 11 | erste Stirnwand | 36 | Axialerstreckung erster Außen-mantel |
| 12 | erste Innenmantelfläche | | |
| 13 | Stirninnenfläche | 37 | äußerer Umfang |
| 14 | Einströmöffnung | 38 | zweiter Verbindungsabschnitt |
| 15 | erster innenliegender Rohrabschnitt | 39 | Flansch zweiter Verbindungsabschnitt |
| | | | |
| 16 | Außenmantelfläche | 40 | Querschnittsabmessung zweiter Außenmantel |
| 17 | Kammertrennwand | | |
| 18 | erste Wandfläche | 41 | Axialerstreckung zweiter Außen-mantel |
| 19 | Ansatz | | |
| 20 | außenliegende Mantelfläche | 42 | erster außenliegender Rohrab-schnitt |
| 21 | zweiter Außenmantel | | |
| 22 | zweite Innenmantelfläche | 43 | zweiter außenliegender Rohrab-schnitt |
| 23 | zweite Stirnwand | | |
| 24 | zweite Stirninnenfläche | 44 | Ringraum |
| 25 | Ausströmöffnung | 45 | Außenmantelfläche außenliegende Rohrabschnitte |
| 26 | einströmseitig | | |
| 27 | ausströmseitig | 46 | Außendurchmesser Rohrabschnitt |
| 28 | Anschlussstutzen | 47 | Spaltweite |
| | | 48 | Länge Ringraum |
| 49 | | Wandstärke außenliegender Rohrabschnitt | |
| 50 | | Positionierelement | |
| 51 | | innerer Umfang | |
| 52 | | erster Kammerspalt | |
| 53 | | freie Durchströmöffnung | |
| 54 | | zweiter Kammerspalt | |
| 55 | | Innendurchmesser Rohrabschnitte | |
| 56 | | Axialerstreckung erster innenliegender Rohrabschnitt | |
| 57 | | Axialerstreckung zweiter innenliegender Rohrabschnitt | |
| 58 | | erster Steg | |
| 59 | | zweiter Steg | |
| 60 | | erste Stegstirnseite erster Steg | |
| 61 | | zweite Stegstirnseite erster Steg | |
| 62 | | Abstützabschnitt erster Steg | |
| 63 | | Abstufung | |
| 64 | | erste Stegstirnseite zweiter Steg | |
| 65 | | zweite Stegstirnseite zweiter Steg | |
| 66 | | Abstützabschnitt zweiter Steg | |
| 67 | | Positionierzapfen | |
| 68 | | Fahrzeug | |
| 69 | | Turbolader | |

## Patentansprüche

1. Fahrzeugschalldämpfer (1) für eine Ladeluftleitung eines Verbrennungsmotors mit Turbolader (69), umfassend:
zumindest ein erstes Gehäuseteil (2) mit einem ersten Außenmantel (10) und ein zweites Gehäuseteil (3) mit einem zweiten Außenmantel (21), welche Gehäuseteile (2, 3) in einem Verbindungsbereich (4) miteinander gekoppelt sind und eine Außenhülle (9) des Fahrzeugschalldämpfers (1) bilden;
ein Resonatorinnenelement (31), welches formschlüssig in zumindest einem der Gehäuseteile (2, 3) aufgenommen ist und zumindest eine Kammertrennwand (17), sowie an einen inneren Umfang (51) der Kammertrennwand (17) anschließend zumindest einen ersten innenliegenden Rohrabschnitt (15) aufweist,
wobei durch die beiden Gehäuseteile (2, 3) und das Resonatorinnenelement (31) zumindest eine erste (6) und eine zweite Resonatorkammer (7) ausgebildet sind,
wobei die erste Resonatorkammer (6) innenseitig partiell durch den ersten innenliegenden Rohrabschnitt (15) des Resonatorinnenelementes (31), respektive durch eine Außenmantelfläche (16) des ersten innenliegenden Rohrabschnittes (15) und durch eine erste Wandfläche (18) der Kammertrennwand (17) begrenzt ist, wobei die zweite Resonatorkammer (7) durch eine zweite Wandfläche (32) der Kammertrennwand (17) zur ersten Resonatorkammer (6) abgegrenzt ist,
wobei das Resonatorinnenelement (31) an einen äußeren Umfang (37) der Kammertrennwand (17) anschließend zumindest einen ersten außenliegenden Rohrabschnitt (42) aufweist, welcher koaxial zum ersten innenliegenden Rohrabschnitt (15) des Resonatorinnenelementes (31) ausgebildet ist, **dadurch gekennzeichnet, dass** ein Ringraum (44) zwischen dem außenliegenden Rohrabschnitt (42) und dem ersten Außenmantel (10) und/oder dem zweiten Außenmantel (21) ausgebildet ist.

2. Fahrzeugschalldämpfer nach Anspruch 1, **dadurch gekennzeichnet, dass** das erste (2) und das zweite Gehäuseteil (3) aus einem metallischen Werkstoff ausgeführt sind.

3. Fahrzeugschalldämpfer nach Anspruch 1 oder 2, **dadurch gekennzeichnet, dass** das Resonatorinnenelement (31) aus einem Kunststoffmaterial ausgebildet ist.

4. Fahrzeugschalldämpfer nach einem der vorhergehenden Ansprüche, **dadurch gekennzeichnet, dass** am Resonatorinnenelement (31) gegenüberliegend dem ersten innenliegenden Rohrabschnitt (15) ein zweiter innenliegender Rohrabschnitt (29) an die Kammertrennwand (17) anschließt.

5. Fahrzeugschalldämpfer nach einem der vorhergehenden Ansprüche, **dadurch gekennzeichnet, dass** am Resonatorinnenelement (31) gegenüberliegend dem ersten außenliegenden Rohrabschnitt (42) ein zweiter außenliegender Rohrabschnitt (43) an die Kammertrennwand (17) anschließt.

6. Fahrzeugschalldämpfer nach einem der vorhergehenden Ansprüche, **dadurch gekennzeichnet, dass** das Resonatorinnenelement (31) durch ein Positionierelement (50) in Form eines ersten Steges (58) und eines zweiten Steges (59) in seiner Position fixierbar ist.

7. Fahrzeugschalldämpfer nach einem der vorhergehenden Ansprüche, **dadurch gekennzeichnet, dass** eine Spaltweite (47) des Ringraumes (44) relativ zur Länge (48) des Ringraumes (44) zwischen 0,5% und 20%, insbesondere zwischen 1,5% und 10%, bevorzugt zwischen 2,5% und 3,5% beträgt.

8. Fahrzeugschalldämpfer nach einem der vorhergehenden Ansprüche, **dadurch gekennzeichnet, dass** die Länge (48) des Ringraumes (44) zwischen 5mm und 80mm, insbesondere zwischen 10mm und 50mm, bevorzugt zwischen 15mm und 25mm beträgt.

9. Fahrzeugschalldämpfer nach einem der vorhergehenden Ansprüche, **dadurch gekennzeichnet, dass** die Spaltweite (47) des Ringraumes (44) relativ zu einer Wandstärke (49) des außenliegenden Rohrabschnittes (42) zwischen 20% und 200%, insbesondere zwischen 50% und 150%, bevorzugt zwischen 80% und 100% beträgt.

10. Fahrzeugschalldämpfer nach einem der vorhergehenden Ansprüche, **dadurch gekennzeichnet, dass** das erste (2) und das zweite Gehäuseteil (3) als Blechumformteil ausgebildet sind.

## Claims

1. A vehicle silencer (1) for a supercharger duct of a combustion engine with a turbocharger (69), comprising:
at least a first housing part (2) with a first outer casing (10) and a second housing part (3) with a second outer casing (21), which housing parts (2, 3) are coupled to one another in a connecting area (4) and form an outer casing (9) of the vehicle silencer (1);
a resonator inner element (31), which is mounted in a form-fitting manner in at least one of the housing parts (2, 3) and comprises at least one chamber dividing wall (17), and at least one first inner pipe section (15) adjoining an inner perimeter (51) of the chamber dividing wall (17),
wherein at least one first (6) and one second resonator chamber (7) are formed by the two housing parts (2, 3) and the resonator inner element (31),
wherein the first resonator chamber (6) is delimited on the inside partially by the first inner pipe section (15) of a resonator inner element (31), or by an outer casing surface (16) of the first inner pipe section (15) and by a first wall surface (18) of the chamber dividing wall (17), wherein the second resonator chamber (7) is delimited by a second wall surface (32) of the chamber dividing wall (17) relative to the first resonator chamber (6),
wherein the resonator inner element (31) adjoining an outer perimeter (37) of the chamber dividing wall (17) comprises at least one first outer pipe section (42), which is designed to be coaxial to the first inner pipe section (15) of the resonator inner element (31), **characterized in that** an annulus (44) is formed between the outer pipe section (42) and the first outer casing (10) and/or the second outer casing (21).

2. The vehicle silencer according to claim 1, **characterized in that** the first (2) and the second housing part (3) are made from a metal material.

3. The vehicle silencer according to claim 1 or 2, **characterized in that** the resonator inner element (31) is made from a plastic material.

4. The vehicle silencer according to one of the preceding claims, **characterized in that** on the resonator inner element (31) opposite the first inner pipe section (15) a second inner pipe section (29) adjoins the chamber dividing wall (17).

5. The vehicle silencer according to one of the preceding claims, **characterized in that** on the resonator inner element (31) opposite the first outer pipe section (42) a second outer pipe section (43) adjoins the chamber dividing wall (17).

6. The vehicle silencer according to one of the preceding claims, **characterized in that** the resonator inner element (31) can be fixed in position by a positioning element (50) in the form of a first web (58) and a second web (59).

7. The vehicle silencer according to one of the preceding claims, **characterized in that** a gap width (47) of the annulus (44) relative to the length (48) of the annulus (44) is between 0.5% and 20%, in particular between 1.5% and 10%, preferably between 2.5% and 3.5%.

8. The vehicle silencer according to one of the preceding claims, **characterized in that** the length (48) of the annulus (44) is between 5mm and 80mm, in particular between 10mm and 50mm, preferably between 15mm and 25mm.

9. The vehicle silencer according to one of the preceding claims, **characterized in that** the gap width (47) of the annulus (44) relative to a wall thickness (49) of the outer pipe section (42) is between 20% and 200%, in particular between 50% and 150%, preferably between 80% and 100%.

10. The vehicle silencer according to one of the preceding claims, **characterized in that** the first (2) and the second housing part (3) are designed as a sheet metal formed part.

## Revendications

1. Silencieux de véhicule (1) pour une conduite d'air de suralimentation d'un moteur à combustion avec turbocompresseur (69), comprenant :
au moins une première partie de boîtier (2) avec une première enveloppe externe (10) et une deuxième partie de boîtier (3) avec une deuxième enveloppe externe (21), ces parties de boîtier (2, 3) étant couplées entre elles dans une zone de liaison (4) et formant une coque externe (9) du silencieux de véhicule (1) ;
un élément interne de résonateur (31), qui est logé par complémentarité de forme dans au moins une des parties de boîtier (2, 3) et au moins une cloison de chambre (17) ainsi que au niveau d'une périphérie interne (51) de la cloison de chambre (17), ensuite au moins une première portion tubulaire interne (15),
dans lequel les deux parties de boîtier (2, 3) et l'élément interne de résonateur (31) forment au moins une première (6) et une deuxième chambres de résonateur (7), dans lequel la première chambre de résonateur (6) est délimitée, à l'intérieur,
partiellement par la première portion tubulaire interne (15) de l'élément interne de résonateur (31), respectivement par une surface d'enveloppe externe (16) de la première portion tubulaire interne (15) et par une première surface de paroi (18) de la cloison de chambre (17), dans lequel la deuxième chambre de résonateur (7) est délimitée par rapport à la première chambre de résonateur (6) par une deuxième surface de paroi (32) de la cloison de chambre (17),
dans lequel l'élément interne de résonateur (31) comprend ensuite, au niveau d'une périphérie externe (37) de la cloison de chambre (17), au moins une première portion tubulaire externe (42) qui est réalisée de manière coaxiale par rapport à la première portion tubulaire interne (15) de l'élément interne de résonateur (31), **caractérisé en ce qu'**un espace annulaire (44) est formé entre la portion tubulaire externe (42) et la première enveloppe externe (10) et/ou la deuxième enveloppe externe (21).

2. Silencieux de véhicule selon la revendication 1, **caractérisé en ce que** les première (2) et deuxième (3) parties de boîtier sont constituées d'un matériau métallique.

3. Silencieux de véhicule selon la revendication 1 ou 2, **caractérisé en ce que** l'élément interne de résonateur (31) est constitué d'une matière plastique.

4. Silencieux de véhicule selon l'une des revendications précédentes, **caractérisé en ce que**, au niveau de l'élément interne de résonateur (31), en face de la première portion tubulaire interne (15), une deuxième portion tubulaire interne (29) suit la cloison de chambre (17).

5. Silencieux de véhicule selon l'une des revendications précédentes, **caractérisé en ce que**, au niveau de l'élément interne de résonateur (31), en face de la première portion tubulaire externe (42), une deuxième portion tubulaire externe (43) suit la cloison de chambre (17).

6. Silencieux de véhicule selon l'une des revendications précédentes, **caractérisé en ce que** l'élément interne de résonateur (31) peut être fixé dans sa position par un élément de positionnement (50) sous la forme d'une première nervure (58) et d'une deuxième nervure (59).

7. Silencieux de véhicule selon l'une des revendications précédentes, **caractérisé en ce qu'**une largeur d'interstice (47) de l'espace annulaire (44) par rapport à la longueur (48) de l'espace annulaire (44) représente entre 0,5 % et 20 %, plus particulièrement entre 1,5 % et 10 %, de préférence entre 2,5 % et 3,5 %.

8. Silencieux de véhicule selon l'une des revendications précédentes, **caractérisé en ce que** la longueur (48) de l'espace annulaire (44) représente entre 5 mm et 80 mm, plus particulièrement entre 10 mm et 50 mm, de préférence entre 15 mm et 25 mm.

9. Silencieux de véhicule selon l'une des revendications précédentes, **caractérisé en ce que** la largeur d'interstice (47) de l'espace annulaire (44) par rapport à une épaisseur de paroi (49) de la portion tubulaire externe (42) représente entre 20 % et 200 %, plus particulièrement entre 50 % et 150 %, de préférence entre 80 % et 100 %.

10. Silencieux de véhicule selon l'une des revendications précédentes, **caractérisé en ce que** les première (2) et deuxième (3) parties de boîtier sont conçues comme des pièces en tôle formée.
